# EUROPÄISCHE PATENTANMELDUNG

(11) **EP 2 216 846 A1**
(43) Veröffentlichungstag der Anmeldung: **11.08.2010**
(21) Anmeldenummer: 09001158.6
(22) Anmeldetag: 28.01.2009
(51) Int. Cl.: H01M 8/06, H01M 8/24, H01M 8/04, H01M 8/10

(54) **Brennstoffzelle Verfahren zum Herstellen einer solchen**

(71) Anmelder: Micronas GmbH, 79108 Freiburg i. Br. (DE)
(72) Erfinder: Erdler, Gilbert, Dr., 79100 Freiburg (DE); Frank, Mirko, Dipl.-Ing., 79292 Pfaffenweiler (DE); Müller, Claas, Dr., 79104 Freiburg (DE); Reinecke, Holger, Prof.Dr., 79312 Emmendingen (DE)
(74) Vertreter: Huwer, Andreas

(57) **Zusammenfassung**

Bei einem Verfahren zum Herstellen einer Brennstoffzelle (1) wird ein Substrat (2) bereitgestellt, auf dem eine Struktur für eine flächige Elektrode (3) erzeugt wird, die für gasförmigen oder flüssigen Brennstoff undurchlässig und für in dem Brennstoff enthaltene Protonen leitfähig ist. Die Elektrode (3) wird mit einer für Protonen durchlässigen Elektrolytschicht (4) beschichtet, die ein zusätzliches katalytisches Material aufweist. Auf die Elektrolytschicht (4) wird eine Struktur für eine Gegenelektrode (6) aufgebracht. An der der Elektrode (3) abgewandten Rückseite des Substrats (2) wird derart Material abgetragen, dass die dem Substrat (2) zugewandte Rückseitenfläche (9) der Elektrode (3) bereichsweise freigelegt wird. Die Rückseitenfläche (9) der Elektrode (3) wird mit dem Brennstoff in Kontakt gebracht und ein Reaktant wird über die Gegenelektrode (6) der Elektrolytschicht (4) zugeführt.

## Beschreibung

Die Erfindung betrifft eine Brennstoffzelle mit einem Substrat, auf dem ein Schichtstapel angeordnet ist, der zumindest eine Elektrode, eine Gegenelektrode und eine zwischen der Elektrode und der Gegenelektrode angeordnete, für Protonen durchlässige Elektrolytschicht umfasst, die an ein katalytisches Material angrenzt, einer Brennstoff-Bereitstellungseinrichtung, die zum Zuführen eines Protonen enthaltenden Brennstoffs mit der Elektrode verbunden ist, einer Reaktant-Bereitstellungseinrichtung, die zum Zuführen eines Reaktanden über die Gegenelektrode mit der Elektrolytschicht verbunden ist, wobei der Reaktant dazu geeignet ist, mit den Protonen zur Stromerzeugung zu reagieren. Ferner betrifft die Erfindung ein Verfahren zum Herstellen einer Brennstoffzelle.

Aus DE 102 17 034 B4 ist eine Brennstoffzelle bekannt, die zwei nebeneinander angeordnete Schichtstapel aufweist, die jeweils eine als Anode dienende Elektrode, eine als Kathode dienende Gegenelektrode und eine zwischen diesen angeordnete, für Protonen durchlässige, Elektrolytschicht haben, die als Polymer-Elektrolymembran ausgestaltet ist. Die Schichtstapel sind über sich horizontal überlappende Verschaltungsfahnen elektrisch in Reihe geschaltet. Die Verschaltungsfahnen sind anoden- und kathodenseitig jeweils mit Stromkollektoren verbunden. Die Brennstoffzelle ist als Verbund einer ersten, anodenseitigen Leiterplatte und einer zweiten, kathodenseitigen Leiterplatte ausgeführt. Die Verschaltungsfahnen und die Stromkollektoren sind als Leiterbahnen dieser Leiterplatten ausgestaltet und über senkrechte Verbindungselemente, welche die sich horizontal überlappenden Verschaltungsfahnen zweier Brennstoffzellen miteinander verbinden. Die Elektroden und die Gegenelektroden bestehen aus einem porösen, katalytischen Material und in die Leiterplatten sind Casverteilstrukturen eingearbeitet. Über die anodenseitige Gasverteilstruktur und die poröse Anode wird der Polymer-Elektrolymembran ein Protonen enthaltender Brennstoff und über die kathodenseitige Gasverteilstruktur und die poröse Kathode ein Reaktant zugeführt, der mit den Protonen zur Stromerzeugung chemisch reagiert. Zum Betreiben der Brennstoffzelle werden Ventile und Druckregler für den zuzuführenden Brennstoff benötigt.

Die Miniaturisierung einer solchen Brennstoffzelle ist mit bisher nicht gelösten Problemen behaftet. Mit zunehmendem Miniaturisierungsgrad wird es technologisch aufwandiger, bei den benötigten mechanischen Bauteilen, die bewegliche Teile aufweisen, wie Ventilen und Druckreglern, Passungen und Führungen mit ausreichend guten Toleranzen zu fertigen. Außerdem wird die Montage der Brennstoffzelle, die bei der Fertigung aus mehreren Einzelteilen zusammengesetzt wird, bei zunehmendem Miniaturisierungsgrad immer schwieriger. Ein weiterer Nachteil der bekannten Brennstoffzelle besteht darin, dass bei Verwendung einer Brennstoff-Bereitstellungseinrichtung und/oder einer Reaktant-Bereitstellungseinrichtung, die außer dem Brennstoff bzw. dem Reaktant mindestens ein sich von dem Brennstoff bzw. dem Reaktant unterscheidendes Gas abgibt, dieses Gas durch die poröse Anode bzw. Kathode hindurch zu der Elektrolytschicht gelangen kann und dort eine sogenannte Vergiftung der Brennstoffzelle bewirken kann, welche die chemische Reaktion zwischen dem Brennstoff bzw. dem Reaktant und den Protonen hemmt. Durch die Vergiftung reduziert sich die bei der chemischen Reaktion zwischen der Elektrode und der Gegenelektrode auftretenden elektrische Zellenspannung.

Es besteht deshalb die Aufgabe, eine Brennstoffzelle der eingangs genannten Art zu schaffen, die bei kompakten Abmessungen einen einfachen und kostengünstigen Aufbau sowie eine hohe Zellenspannung ermöglicht. Außerdem besteht die Aufgabe, ein Verfahren zum Herstellen einer solchen Brennstoffzelle anzugeben.

Diese Aufgabe wird bezüglich der Brennstoffzelle dadurch gelöst, dass das Substrat mindestens eine Durchtrittsöffnung aufweist, dass die Elektrode als freitragende, die Durchtrittsöffnung abdeckende Metallmembran ausgebildet ist, die die für Wasserstoffatome (Protonen) durchlässig ist und den Durchtritt von gasförmigem oder flüssigem Brennstoff zur Elektrolytschicht sperrt, und dass die Brennstoff-Bereitstellungseinrichtung zum Zuführen des Brennstoffs über die Durchtrittsöffnung mit der Elektrode verbunden ist.

In vorteilhafter Weise wird die Elektrolytschicht durch das für gasförmigen sowie flüssigen Brennstoff undurchlässige Substrat und die die Durchtrittsöffnung abdeckende, für gasförmigen Brennstoff undurchlässige Metallmembran gegen den Brennstoff abgedichtet, so dass nur die im Brennstoff enthaltenen Wasserstoffatome (Protonen) zu der Elektrolytschicht gelangen können. Somit wird eine chemische Vergiftung der Brennstoffzelle von vorne herein vermieden.

Da gasförmiger Brennstoff von der Metallmembran zurückgehalten wird, kann der Brennstoffigasdruck nicht oder nur in abgeschwächter Form auf die Elektrolytschicht übertragen werden. In vorteilhafter Weise ist es dadurch möglich, die in dem Substrat vorgesehene, an die Elektrode angrenzende Öffnung ohne Zwischenschaltung eines Druckreglers und/oder Ventils direkt mit der Brennstoff-Bereitstellungseinrichtung zu verbinden bzw. mit dem Brennstoffgasdruck der Brennstoff-Bereitstellungseinrichtung zu beaufschlagen. Somit kann die Brennstoffzelle völlig ohne bewegliche Teile aufgebaut werden. Die Brennstoffzelle lässt sich mit aus der Halbleiterfertigungstechnik bekannten Prozessschritten kostengünstig mit sehr kompakten Abmessungen herstellen.

Das Substrat ist vorzugsweise ein Halbleitersubstrat. Dabei ist es sogar möglich, dass in das Substrat zusätzlich zu der Brennstoffzelle eine elektronische Schaltung integriert ist, die vorzugsweise über die Brennstoffzelle mit elektrischer Energie versorgt wird.

Bei einer vorteilhaften Ausgestaltung der Erfindung sind auf dem Substrat zumindest ein erster Schichtstapel und ein zweiter Schichtstapel nebeneinander angeordnet, zwischen denen ein Zwischenraum gebildet ist, durch den die Elektroden und die Elektrolytschichten der Schichtstapel jeweils voneinander beabstandet sind, wobei sich die Gegenelektrode des zweiten Schichtstapels bis in den Zwischenraum erstreckt und dort mit der Elektrode des ersten Schichtstapels direkt oder indirekt über eine Leiterbahn elektrisch leitend verbunden ist. Die einzelnen, durch die Schichtstapel gebildeten elektrochemischen Zellen der Brennstoffzelle sind also ohne die Verwendung von Durchkontaktierungen auf einfache Weise in Reihe geschaltet. Die Brennstoffzelle kann dadurch noch kostengünstiger hergestellt werden.

Bei einer bevorzugten Ausführungsform der Erfindung ist die aus dem Substrat und dem mindestens einen Schichtstapel gebildete Anordnung derart in der Innenhöhlung eines Gehäuses angeordnet, dass sie die Innenhöhlung in eine erste Kammer und eine davon abgetrennte zweite Kammer unterteilt, wobei die erste Kammer die Brennstoff-Bereitstellungseinrichtung und die zweite Kammer die Reaktant-Bereitstellungseinrichtung aufweist. Die Brennstoff-Bereitstellungseinrichtung ist dann von den an die erste Kammer angrenzenden Gehäusewänden sowie vom Substrat und der Elektrode umkapselt, so dass der bereitgestellte Brennstoff nicht in die zweite Kammer gelangen und mit der dort befindlichen Gegenelektrode und/oder der Elektrolytschicht in Kontakt geraten kann. Durch das Gehäuse ist die aus dem Substrat und dem mindestens einen Schichtstapel gebildete Anordnung außerdem gegen mechanische Beschädigung geschützt.

Vorteilhaft ist, wenn die Gegenelektrode als Luftdiffusionsschicht ausgestaltet ist, die für Luftsauerstoff als Reaktant durchlässig ist. Der Reaktant kann dann auf einfache Weise aus der Atmosphäre bezogen werden. Die Lufldiffusionsschicht kann Kohlenstoffpartikel enthalten, die an ihrer Oberfläche mit Platin beschichtet sind. Über die Luftdiffusionsschicht kann außerdem das bei der Brennstoffreaktion entstehende Reaktionsprodukt aus der zweiten Kammer nach außen abgeleitet werden.

Die Elektrode besteht vorzugsweise aus Palladium oder einer Palladium/Silber Legierung. Dabei kann als Brennstoff Wasserstoff zum Einsatz kommen.

Zweckmäßigerweise enthält die Brennstoff-Bereitstellungseinrichtung ein chemisches Hydrid.. Das Hydrid ist vorzugsweise Natriumborhydrid (NaBH₄). Aus dem Hydrid kann durch eine katalytische Hydrolyse Wasserstoff als Brennstoff freigesetzt werden.

Bei einer vorteilhaften Ausgestaltung der Erfindung enthält die Brennstoff-Bereitstellungseinrichtung mindestens eine Kohlenwasserstoffverbindung, wobei die der Elektrolytschicht abgewandte Rückseite der Elektrode mit einem Katalysator beschichtet ist, der mit der Kohlenwasserstoffverbindung in Kontakt steht und aus dieser katalytisch Wasserstoff als Brennstoff erzeugt. Die Kohlenwasserstoffverbindung kann beispielsweise Methanol, Ethanol oder Ether sein. Der Katalysator kann Platin und/oder Ruthenium enthalten.

Bei einer anderen zweckmäßigen Ausführungsform der Erfindung ist die Brennstoff-Bereitstellungseinrichtung als Zink-Kaliumhydrixid-Zelle ausgestaltet. Es kann also eine im Handel verfügbare Zelle zum Einsatz kommen. Dabei ist es sogar möglich, dass das Gehäuse der Brennstoffzelle derart ausgestaltet ist, dass die Brennstoff-Bereitstellungseinrichtung auswechselbar ist.

Die Gegenelektrode besteht vorzugsweise aus Platin oder einer Platinlegierung. Die Gegenelektrode erfüllt dann auch die Funktion eines Katalysators für die chemische Reaktion zwischen den Protonen und dem Reaktant.

Die vorstehend genannte Aufgabe wird bezüglich des Verfahrens zum Herstellen einer Brennstoffzelle dadurch gelöst, dass ein Substrat bereitgestellt wird, auf dem eine Struktur für mindestens eine flächige Elektrode erzeugt wird, die für gasförmigen oder flüssigen Brennstoff undurchlässig und für in dem Brennstoff enthaltene Wasserstoffatome (Protonen) leitfähig ist, dass die Elektrode mit einer für Protonen durchlässigen Elektrolytschicht beschichtet wird, die an ein zusätzliches katalytisches Material angrenzt, dass auf die Elektrolytschicht eine Struktur für eine Gegenelektrode aufgebracht wird, dass an der der Elektrode abgewandten Rückseite des Substrats derart Material abgetragen wird, dass die dem Substrat zugewandte Rückseitenfläche der Elektrode bereichsweise freigelegt wird, und dass die Rückseitenfläche der Elektrode mit dem Brennstoff in Kontakt gebracht und ein Reaktant über die Gegenelektrode der Elektrolytschicht zugeführt wird.

In vorteilhafter Weise ermöglicht es das Verfahren, den aus der Elektrode, der Elektrolytschicht und der Gegenelektrode bestehenden Schichtstapel und die Durchtrittsöffnung mit Methoden der Halbleiterfertigung monolithisch in das Substrat zu integrieren. Da die Metallmembran und das Substrat für gasförmigen oder flüssigen Brennstoff undurchlässig ist, kann der Brennstoff von der der Elektrode abgewandten Rückseite des Substrats aus der Elektrode zugeführt werden, ohne dass der Brennstoff mit der Elektrolytschicht in Kontakt gerät. Die nach dem Verfahren hergestellte Brennstoffzelle benötigt keine mikrostrukturierten Flowfields oder Diffusionsschichten um die Edukte der Elektrode bzw. Gegenelektrode zuzuführen. Mit Hilfe des Verfahrens können auf das Substrat gleichzeitig mehrere der Schichtstapel aufgebracht werden.

Bei einer bevorzugten Ausgestaltung des Verfahrens werden auf dem Substrat mindestens eine erste Elektrode und eine zweite Elektrode derart erzeugt, dass sie durch einen Zwischenraum seitlich voneinander beabstandet sind, wobei die erste Elektrode mit einer ersten Elektrolytschicht und die zweite Elektrode mit einer zweiten Elektrolytschicht beschichtet werden, wobei auf die erste Elektrolytschicht eine erste Gegenelektrode und auf die zweite Elektrolytschicht eine zweite Gegenelektrode aufgebracht wird, wobei die zweite Gegenelektrode derart hergestellt wird, dass sie sich seitlich bis in den Zwischenraum erstreckt, und wobei die zweite Gegenelektrode in dem Zwischenraum mit der ersten Elektrode elektrisch verbunden wird. Dadurch ist es möglich, mehrere elektrochemische Zellen (Elektrode, Elektrolytschicht, Gegenelektrode) ohne Durchkontaktierungen auf einfache Weise auf dem Substrat in Reihe zu schalten.

Vorteilhaft ist, wenn das Material derart an der Rückseite des Substrats abgetragen wird, dass in das Substrat eine Durchtrittsöffnung eingebracht wird, deren Querschnitt sich ausgehend von der der Elektrode abgewandten Rückseite des Substrats zur Elektrode hin verjüngt. Die konische Lochung wird zweckmäßigerweise durch anisotropes Ätzen hergestellt. Durch die konische Lochung werden Gasblasen von Fremdgasen, die beispielsweise bei einer Erzeugung des Brennstoffs aus Methanol während des Betriebs der Brennstoffzelle in die Lochung geraten können, aufgrund von Oberflächenkräften von der Elektrode weggeleitet.

Bei einer bevorzugten Ausgestaltung des Verfahrens wird die aus dem Substrat, der wenigstens einen Elektrode, der mindestens einen der Gegenelektrode und der zumindest einen Elektrolytschicht gebildete Anordnung derart in eine Innenhöhlung eines Gehäuses eingebracht, dass sie die Innenhöhlung in eine erste Kammer und eine davon abgetrennte zweite Kammer unterteilt, und dass in die erste Kammer der Brennstoff und in die zweite Kammer der Reaktant eingebracht wird. Der Brennstoff ist dann durch die erste Kammer gegen die Elektrolytschicht und die Gegenelektrode gekapselt.

Vorteilhaft ist, wenn die zweite Kammer eine Durchtrittslochung aufweist, und wenn die Durchtrittslochung mit einer Abdeckung aus einem porösen, für den Reaktanden durchlässigen Werkstoff abgedeckt wird und der Reaktant durch die Abdeckung hindurch in die zweite Kammer eingeleitet wird. Die Abdeckung wird vorzugsweise aus einer Teflonmembran hergestellt.

Die mindestens eine Elektrolytschicht wird bevorzugt als Polymerschicht ausgebildet, insbesondere als Polyelektrolytmembran.

Nachfolgend ist ein Ausführungsbeispiel der Erfindung anhand der Zeichnung näher erläutert. Es zeigt
Fig. 1 einen Querschnitt durch ein aus einem Halbleiterwerkstoff bestehendes Substrat, das mit mehreren flächigen Elektroden strukturiert wurde,
Fig. 2 einen Querschnitt durch die in Fig: 1 gezeigte Anordnung nach dem Aufbringen von Elektrolytschichten, Gegenelektroden und Leiterbahnen auf das Substrat,
Fig. 3 einen Querschnitt durch die in Fig. 2 gezeigte Anordnung, nachdem in das Substrat rückseitig Öffnungen eingebracht wurden, und

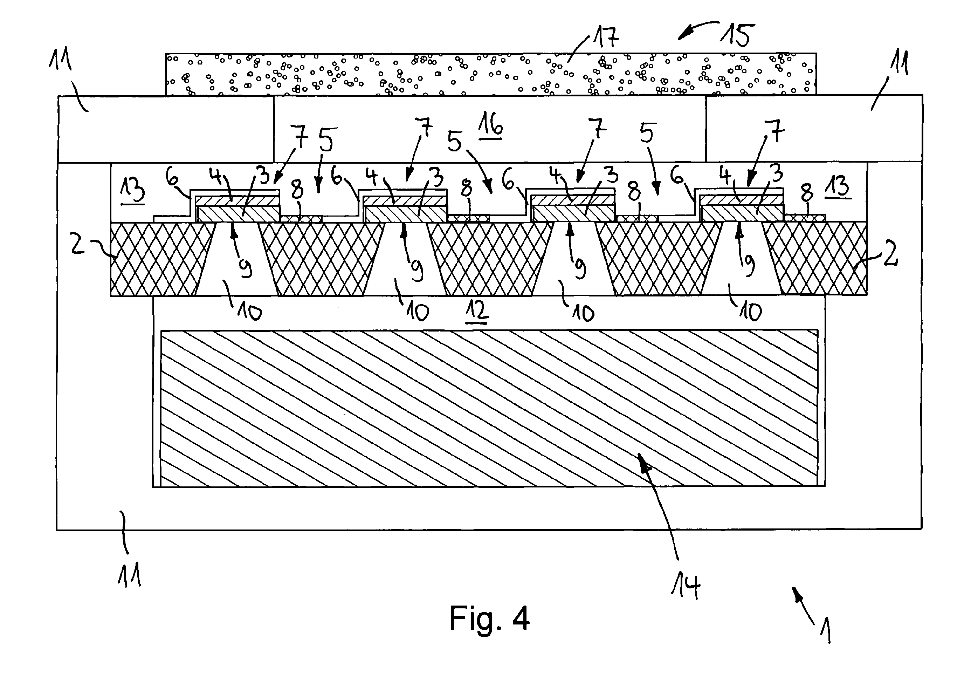

Fig. 4 einen Querschnitt durch die in Fig. 3. gezeigte Anordnung, nach dem Einbau in ein Gehäuse.

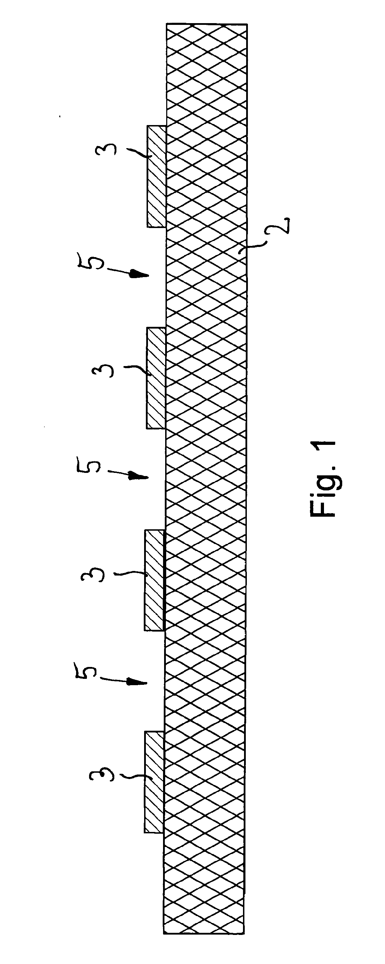

Bei einem Verfahren zum Herstellen einer Brennstoffzelle 1 wird als Substrat 2 ein Halbleiterwafer bereitgestellt. Auf das Substrat 2 wird ein dünner Palladiumfilm oder ein Film aus einer Palladium/Silber Legierung aufgebracht, beispielsweise mit einer von Dicke im Bereich von 1-10 µm. Wie in Fig. 1 erkennbar ist, wird der Palladiumfilm derart strukturiert, dass mehrere flächige Elektrode 3 erzeugt werden, die seitlich durch Zwischenräume 5 voneinander beabstandet sind. Die Elektroden 3 bilden später die Anoden der Brennstoffzelle 1.

In einem weiteren Verfahrensschritt wird auf die Elektroden 3 und das Substrat 2 eine für Protonen durchlässigen Elektrolytschicht 4 aufgebracht, die als Polymerelektrolytmembran ausgestaltet ist. Die Elektrolytschicht 4 wird derart strukturiert, dass sie im Wesentlichen nur über den Elektroden 3 angeordnet ist und diese ganzflächig bedeckt.

Die Elektrolytschicht 4 und das Substrat 2 wird nun flächig mit einer elektrisch leitenden Luftdiffusionsschicht beschichtet, die für Luftsauerstoff und Wasser durchlässig ist. Die Luftdiffusionsschicht ist porös und weist eine Vielzahl von Kohlenstoffpartikeln auf, die mit einem katalytisch aktiven Material, wie z.B. Platin oder einer Platinlegierung beschichtet sind.

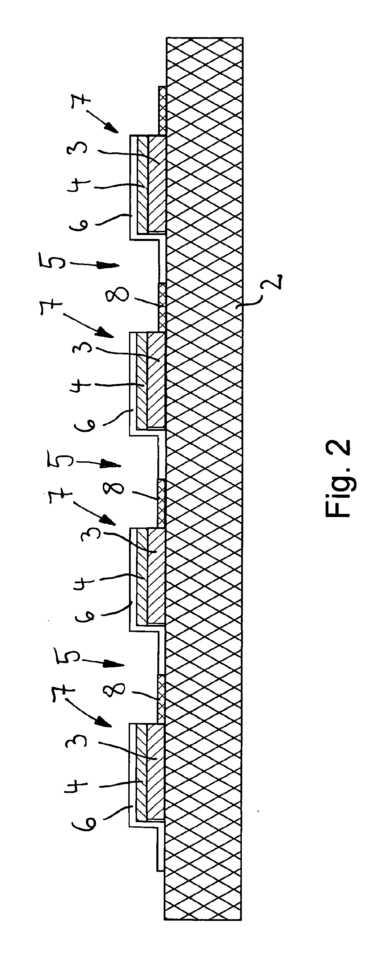

Die Luftdiffusionsschicht wird derart strukturiert, dass für jede Elektrode 3 jeweils eine Gegenelektrode 6 ausgebildet wird, die über der betreffenden Elektrode 3 angeordnet ist und durch die Elektrolytschicht 4 quer zur Ebene des Wafers von Elektrode 3 beabstandet ist. Die Gegenelektroden 6 bilden später die Kathoden der Brennstoffzelle 1. In Fig. 2 ist erkennbar, dass die Elektroden 3, die strukturierte Elektrolytschicht 4 und die Gegenelektroden 6 mehrere Schichtstapel 7 bilden, die auf dem Substrat 2 nebeneinander angeordnet sind.

Die Gegenelektroden werden so strukturiert, dass sie an einer Seite jeweils seitlich über die Elektrolytschicht 4 überstehen und mit ihrem überstehenden Teilbereich das Substrat 2 bedecken. In Fig. 2 ist erkennbar, dass die überstehenden Teilbereiche jeweils in dem Zwischenraum 5 zu einem benachbarten Schichtstapel angeordnet sind und über eine im Zwischenraum 5 vorgesehene Leiterbahn 8 elektrisch mit der Elektrode 3 des benachbarten Schichtstapels 7 verbunden sind. Die durch die einzelnen Schichtstapel 7 gebildeten elektrochemischen Zellen sind also über die Leiterbahnen 8 elektrisch in Reihe geschaltet.

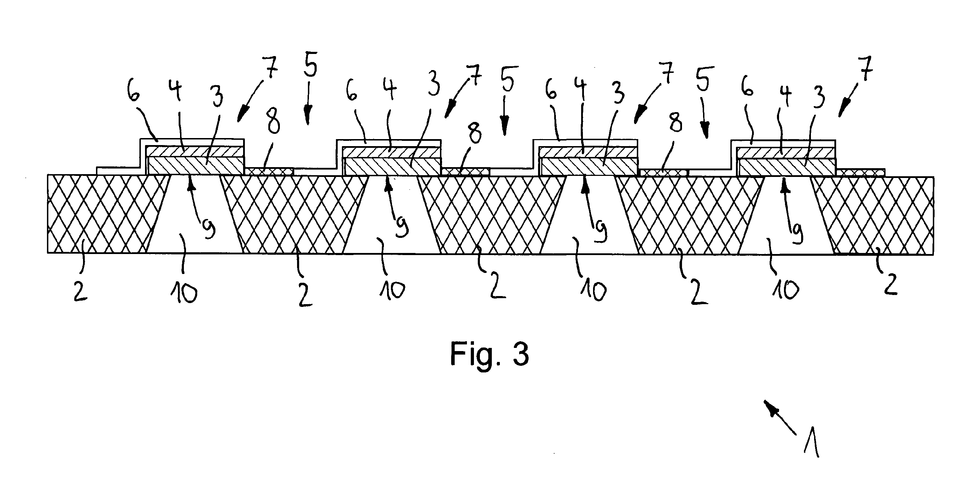

In einem weiteren Verfahrensschritt wird an der den Elektroden 3 abgewandten Rückseite des Substrats 2 derart Material abgetragen, dass die dem Substrat 2 zugewandten Rückseitenflächen 9 der Elektroden 3 bereichsweise mit Abstand zu ihren Rändern freigelegt werden. In Fig. 3 ist erkennbar, dass durch den Materialabtrag unterhalb der Elektroden 3 Durchtrittsöffnungen 10 in das Substrat 2 eingebracht werden und dass die Elektroden 3 die Durchtrittsöffnungen 10 abdecken. Dabei liegen die Elektroden 3 mit ihrem Randbereich unterbrechungsfrei an dem die Durchtrittsöffnungen 9 umgrenzenden Rand des Substrats 2 an und verschließen die Durchtrittsöffnungen 9 gasdicht. Der Querschnitt der Durchtrittsöffnungen 10 verjüngt sich jeweils, ausgehend von der der Elektrode 3 abgewandten Rückseite des Substrats 2 konisch zur Elektrode 3 hin.

In einem weiteren Verfahrensschritt wird die aus dem Substrat und den Schichtstapeln 7 gebildete Anordnung derart in eine Innenhöhlung eines Gehäuses eingesetzt, dass sie die Innenhöhlung in eine erste Kammer 12 und eine davon abgetrennte zweite Kammer 1 3 unterteilt. In der ersten Kammer 12 wird eine in der Zeichnung nur schematisch dargestellte Brennstoff-Bereitstellungseinrichtung 14 angeordnet, die einen Brennstoffspeicher und/oder eine Brennstoffquelle mit einer Abgabeöffnung für den Brennstoff aufweist. Die Abgabeöffnung ist zum Zuführen des Brennstoffs mit den Durchtrittsöffnungen 10 verbunden. Als Brennstoff ist bevorzugt Wasserstoff vorgesehen.

Bei einem Kontakt mit den Rückseitenflächen 9 der Elektroden 3 werden aus dem Brennstoff Wasserstoffatome / Protonen freigesetzt, die durch die Elektrode 3 und die Elektrolytschicht 4 hindurch zu der Gegenelektrode diffundieren. Dabei werden Elektronen freigesetzt die über einen in der Zeichnung nicht näher dargestellten Stromkreis von den Elektroden 3 zu den Gegenelektroden 6 fließen.

Die erste Kammer 12 hat ein in der Zeichnung nicht näher dargestelltes, in eine Offen- und eine Schließstellung bringbares Zugangselement, über welches Brennstoff-Bereitstellungseinrichtung 14 aus der ersten Kammer 12 entnommen und durch ein entsprechendes Ersatzteil ersetzt werden kann, wenn der Brennstoff aufgebraucht ist.

Über die zweite Kammer wird als Reaktant Luftsauerstoff der Elektrolytschicht 4 zugeführt. Das Gehäuse 11 wird zu diesem Zweck eine Reaktant-Bereitstellungseinrichtung 15 auf, die in einer Außenwand des Gehäuses eine Durchtrittslochung 16 und eine diese überdeckende Abdeckung 17 aufweist. Die Abdeckung 17 besteht aus einem porösen Werkstoff, der für den Reaktanden durchlässig ist.

Der durch die Abdeckung 17 in die zweite Kammer 1 3 eingetretene Luftsauerstoff diffundiert durch die Gegenelektrode 6 zur Elektrolytschicht 4 und reagiert dort mit den Protonen des Brennstoffs. Bei der Reaktion rekombinieren die über den Stromkreis zu den Gegenelektroden gelangten Elektronen. Als Reaktionsprodukt entsteht Wasser, dass durch die Abdeckung 17 hindurch aus der zweiten Kammer 1 3 austritt.

## Patentansprüche

1. Brennstoffzelle (1) mit
- einem Substrat (2),
- auf dem ein Schichtstapel (7) angeordnet ist, der zumindest
- eine Elektrode (3),
- eine Gegenelektrode (6) und
- eine zwischen der Elektrode (3) und der Gegenelektrode (6) angeordnete, für Protonen durchlässige Elektrolytschicht (4) umfasst, die an ein katalytisches Material angrenzt,
- einer Brennstoff-Bereitstellungseinrichtung (14), die zum Zuführen eines Protonen enthaltenden Brennstoffs mit der Elektrode (3) verbunden ist,
- einer Reaktant-Bereitstellungseinrichtung (15), die zum Zuführen eines Reaktanden über die Gegenelektrode (6) mit der Elektrolytschicht (4) verbunden ist, wobei der Reaktant dazu geeignet ist, mit den Protonen zur Stromerzeugung zu reagieren,
**dadurch gekennzeichnet, dass** das Substrat (2) mindestens eine Durchtrittsöffnung (10) aufweist, dass die Elektrode (3) als freitragende, die Durchtrittsöffnung (10) abdeckende Metallmembran ausgebildet ist, die die für Wasserstoffatome durchlässig ist und den Durchtritt von gasförmigem oder flüssigem Brennstoff zur Elektrolytschicht (4) sperrt, und dass die Brennstoff-Bereitstellungseinrichtung (14) zum Zuführen des Brennstoffs über die Durchtrittsöffnung (10) mit der Elektrode (3) verbunden ist.

2. Brennstoffzelle (1) nach Anspruch 1, **dadurch gekennzeichnet, dass** auf dem Substrat (2) zumindest ein erster Schichtstapel (7) und ein zweiter Schichtstapel (7) nebeneinander angeordnet sind, zwischen denen ein Zwischenraum (5) gebildet ist, durch den die Elektroden (3) und die Elektrolytschichten (4) der Schichtstapel (7) jeweils voneinander beabstandet sind, dass sich die Gegenelektrode (6) des zweiten Schichtstapels (7) bis in den Zwischenraum (5) erstreckt und dort mit der Elektrode (3) des ersten Schichtstapels (7) direkt oder indirekt über eine Leiterbahn (8) elektrisch leitend verbunden ist.

3. Brennstoffzelle (1) nach Anspruch 1 oder 2, **dadurch gekennzeichnet, dass** die aus dem Substrat (2) und dem mindestens einen Schichtstapel (7) gebildete Anordnung derart in der Innenhöhlung eines Gehäuses (11) angeordnet ist, dass sie die Innenhöhlung in eine erste Kammer (12) und eine davon abgetrennte zweite Kammer (1 3) unterteilt, und dass die erste Kammer (12) die Brennstoff-Bereitstellungseinrichtung (14) und die zweite Kammer die Reaktant-Bereitstellungseinrichtung (15) aufweist.

4. Brennstoffzelle (1) nach einem der Ansprüche 1 bis 3, **dadurch gekennzeichnet, dass** die Gegenelektrode (6) als Luftdiffusionsschicht ausgestaltet ist, die für Luftsauerstoff als Reaktant durchlässig ist.

5. Brennstoffzelle (1) nach einem der Ansprüche 1 bis 4, **dadurch gekennzeichnet, dass** die Elektrode (3) aus Palladium oder einer Palladium/Silber Legierung besteht.

6. Brennstoffzelle (1) nach einem der Ansprüche 1 bis 5, **dadurch gekennzeichnet, dass** die Brennstoff-Bereitstellungseinrichtung (14) ein chemisches Hydrid enthält.

7. Brennstoffzelle (1) nach einem der Ansprüche 1 bis 6, **dadurch gekennzeichnet, dass** die Brennstoff-Bereitstellungseinrichtung (14) mindestens eine Kohlenwasserstoffverbindung enthält, und dass die der Elektrolytschicht (4) abgewandte Rückseite der Elektrode (3) mit einem Katalysator beschichtet ist, der mit der Kohlenwasserstoffverbindung in Kontakt steht und aus dieser katalytisch Wasserstoff als Brennstoff erzeugt.

8. Brennstoffzelle (1) nach einem der Ansprüche 1 bis 6, **dadurch gekennzeichnet, dass** die Brennstoff-Bereitstellungseinrichtung (14) als Zink-Kaliumhydrixid-Zelle ausgestaltet ist.

9. Brennstoffzelle (1) nach einem der Ansprüche 1 bis 7, **dadurch gekennzeichnet, dass** die Gegenelektrode (6) aus Platin oder einer Platinlegierung besteht.

10. Verfahren zum Herstellen einer Brennstoffzelle (1), wobei ein Substrat (2) bereitgestellt wird, auf dem eine Struktur für mindestens eine flächige Elektrode (3) erzeugt wird, die für gasförmigen Brennstoff oder flüssigen undurchlässig und für in dem Brennstoff enthaltene Wasserstoffatome leitfähig ist, wobei die Elektrode (3) mit einer für Protonen durchlässigen Elektrolytschicht (4) beschichtet wird, die an ein zusätzliches katalytisches Material angrenzt, wobei auf die Elektrolytschicht (4) eine Struktur für eine Gegenelektrode (6) aufgebracht wird, wobei an der der Elektrode (3) abgewandten Rückseite des Substrats (2) derart Material abgetragen wird, dass die dem Substrat (2) zugewandte Rückseitenfläche (9) der Elektrode (3) bereichsweise freigelegt wird, und wobei die Rückseitenfläche (9) der Elektrode (3) mit dem Brennstoff in Kontakt gebracht und ein Reaktant über die Gegenelektrode (6) der Elektrolytschicht (4) zugeführt wird.

11. Verfahren nach Anspruch 10, wobei auf dem Substrat (2) mindestens eine erste Elektrode (3) und eine zweite Elektrode (3) derart erzeugt werden, dass sie durch einen Zwischenraum (5) seitlich voneinander beabstandet sind, wobei die erste Elektrode (3) mit einer ersten Elektrolytschicht (4) und die zweite Elektrode (3) mit einer zweiten Elektrolytschicht (4) beschichtet werden, wobei auf die erste Elektrolytschicht (4) eine erste Gegenelektrode (6) und auf die zweite Elektrolytschicht (4) eine zweite Gegenelektrode (6) aufgebracht wird, wobei die zweite Gegenelektrode (6) derart hergestellt wird, dass sie sich seitlich bis in den Zwischenraum (5) erstreckt, und wobei die zweite Gegenelektrode (6) in dem Zwischenraum (5) mit der ersten Elektrode (3) elektrisch verbunden wird.

12. Verfahren nach Anspruch 1 0 oder 11, wobei das Material derart an der Rückseite des Substrats (2) abgetragen wird, dass in das Substrat (2) eine Durchtrittsöffnung (10) eingebracht wird, deren Querschnitt sich ausgehend von der der Elektrode (3) abgewandten Rückseite des Substrats (2) zur Elektrode (3) hin verjüngt.

13. Verfahren nach einem der Ansprüche 10 bis 12, wobei die aus dem Substrat (2), der wenigstens einen Elektrode (3), der mindestens einen der Gegenelektrode (6) und der zumindest einen Elektrolytschicht (4) gebildete Anordnung derart in eine Innenhöhlung eines Gehäuses (11) eingebracht wird, dass sie die Innenhöhlung in eine erste Kammer (2) und eine davon abgetrennte zweite (1 3) Kammer unterteilt, und dass in die erste Kammer (12) der Brennstoff und in die zweite Kammer (13) der Reaktant eingebracht wird.

14. Verfahren nach einem der Ansprüche 10 bis 13, wobei die zweite Kammer (1 3) eine Durchtrittslochung (16) aufweist, und wobei die Durchtrittslochung (16) mit einer Abdeckung (17) aus einem porösen, für den Reaktanden durchlässigen Werkstoff abgedeckt wird und der Reaktant durch die Abdeckung (17) hindurch in die zweite Kammer (13) eingeleitet wird.

15. Verfahren nach einem der Ansprüche 10 bis 14, wobei die mindestens eine Elektrolytschicht (4) als Polymerschicht ausgebildet wird, vorzugsweise als Polyelektrolytmembran.
